# EUROPEAN PATENT SPECIFICATION

(11) **EP 2 989 182 B1**
(45) Date of publication and mention of the grant of the patent: **01.08.2018**
(21) Application number: 13737675.2
(22) Date of filing: 22.04.2013
(51) Int. Cl.: C10G 67/02, C10C 3/06, C10G 31/06, C10G 7/06, C10G 7/12, C10G 47/30, C10G 49/04, C08L 95/00, C10G 55/06, C10G 67/00, C10G 49/12, C10C 3/00

(54) **PROCESS FOR TREATING A HYDROCARBON-BASED HEAVY RESIDUE**
VERFAHREN ZUR BEHANDLUNG EINES KOHLENWASSERSTOFF-BASIERTEN SCHWEREN RÜCKSTANDES
PROCÉDÉ DE TRAITEMENT D'UN RÉSIDU LOURD À BASE D'HYDROCARBURES

(43) Date of publication of application: 02.03.2016
(73) Proprietor: ENI S.p.A., 00144 Roma (IT)
(72) Inventor: BELMONTE Giuseppe, I-20133 Milano (IT); MALANDRINO Alberto Maria Antonio, I-20138 Milano (IT); PICCOLO Vincenzo, I-26839 Zelo Buon Persico (IT)
(74) Representative: Bottero, Carlo
(86) International application number: PCT/IT2013/000115
(87) International publication number: WO 2014/174536

(56) References cited:
- WO-A1-2008/027139
- US-A- 3 948 756
- US-A- 5 258 117
- US-A1- 2010 326 882

## Description

### Field of the invention

The present invention relates to a process for treating a hydrocarbon-based residue.

The process and plant according to the invention are particularly suitable for treating and facilitating the use, management and disposal of hydrocarbon-based residues, in particular bituminous residues with a high asphaltene content, obtained as by-product in a previous conversion process of organic residues with a high molecular weight or in any case a high C/H ratio, such as, for example, oils or more generally heavy hydrocarbons, distillation residues possibly already partly deasphalted, bitumens from tar sands, oils deriving from coal and oil shales.

### State of the art

Conversion methods of high-molecular-weight organic residues, such as for example, heavy oils such as distillation residues possibly already partly deasphalted, oils from tar sands, oils deriving from coal and oil shales, are currently known. The conversion is effected by reducing the molecular weight of the residues to be treated, and increasing their H/C ratio. Examples of conversion methods that combine cracking and hydrogenation reactions of the reactive fragments in the presence of catalysts are described in documents US5932090, EP2158304, EP2155835, EP2291238.

An extremely dense bituminous residue is obtained as by-product from the conversion, which, under standard conditions, has the consistency of a viscous paste and is therefore extremely difficult to manage for transportation, sale, disposal or possible re-use on the same production site. This bituminous residue contains an organic fraction normally having an even higher molecular weight, and an even more consistent fraction of coke and inorganic compounds with respect to the residue entering the catalytic hydrocracking process.

The content of coke and inorganic residues forms THFis, i.e. the fraction of material insoluble in tetrahydrofuran.

The bituminous residue is produced in considerable quantities: in a petrochemical plant capable of refining 200,000 barrels/day of crude oil, for example, the relative conversion plant of the organic residues by means of catalytic hydrocracking is capable of producing 60,000 barrels/day.

It would therefore be convenient to convert the bituminous residue into higher-quality products that can be re-used, for example, as combustibles or commercial fuels, or into an inert product that is easier to manage, dispose of and is less harmful for the environment.

Patent US 3,928,170 describes a process (called EUREKA process) for the production of a pitch by means of thermal cracking in a stream of vapour of a bottom oil residue at a pressure within the range of 1.1-3 barg and a temperature in the reaction area of 350-450°C; the reactor is preceded by a furnace, for preheating the charge, and is followed by a separation section of the products. The pitch is extracted from the bottom of the cracking reactor which operates in semibatch to avoid the formation of coke during the preheating phase. This process however is not satisfactory for treating bottom residues with a particularly high concentration of asphaltenes or residues insoluble in tetrahydrofuran.

Patent US 4,477,334 describes a process in which heavy hydrocarbons can be converted in a continuous cracking process, without the formation of coke, forming a pitch as by-product. The solvent deasphalting process uses a solvent (generally propane or butane) under conditions close to those critical for separating the maltene component from the asphaltene component: the asphaltene fraction (which can also contain a certain percentage of solids) is recycled to the process, whereas the maltene fraction (rich in DAO, DeAsphalted Oils), after separating the solvent by extraction under a supercritical condition, forms a product. In the case in question of the production of a concentrated pitch, this process represents the opposite of solvent deasphalting as it is the asphaltene component (rich in solid phase) that is to be extracted and the maltene component recycled.

US5258117 discloses treating a primary reduced crude by heating it in a furnace, conveying the reduced crude into the flash zone of a pipestill vacuum tower, removing heavy and/or light vacuum gas oil from the middle portion of the vacuum tower and removing vacuum-reduced crude from the bottom of the vacuum tower.

The difficulty in applying this process consists in the use of more columns for managing the cycle of the solvent under supercritical conditions.

One of the limitations of the centrifugation is the maximum operating temperature that cannot exceed 150°C. Under these conditions there may be problems relating to the movement and discharging of the concentrated stream, whereas the light phase, which is recycled to the reaction section, is still rich in asphaltene components which jeopardize the performances of the conversion plant.

An objective of the present invention is therefore to overcome the above-mentioned drawbacks of the state of the art, in particular by providing a process for converting the bituminous and pasty residue of previous conversion processes of high-molecular-weight organic residues, into products that can be more easily and conveniently re-used and disposed of.

### Summary of the invention

According to the invention, this objective is achieved with a process having the characteristics according to claim 1.

Further characteristics of the invention are object of the dependent claims.

The advantages that can be obtained with the present invention will appear more evident, to experts in the field, from the following detailed description of a particular non-limiting embodiment, illustrated with reference to the enclosed schematic figures.

### List of figures

Figure 1 shows the scheme of a process for treating bituminous residues according to a particular embodiment of the invention;
Figure 2 shows a scheme of the ejector of the plant of Figure 1.

### Detailed description

In the present description, the expression "compound X prevalently containing the substance Y" unless otherwise specified should be interpreted as meaning that the compound X contains at least 50% by weight of the substance Y.

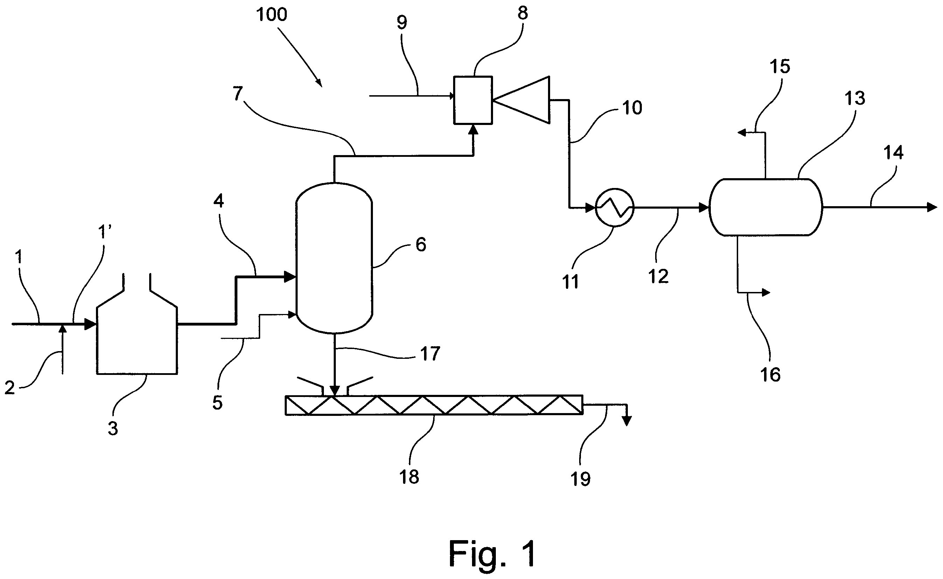

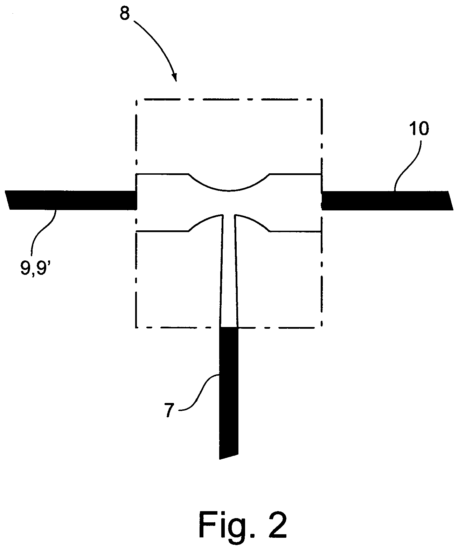

Figures 1, 2 relate to a plant for treating a pitchy or bituminous residue obtained as by-product of a conversion process of organic residues having a high molecular weight or in any case a high C/H ratio, such as for example, heavy oils such as distillation residues possibly already partly deasphalted, bitumens from tar sands, oils deriving from coal and oil shales.

Said plant is indicated with the overall reference number 100. The reference number 1 indicates a feeding stream which is preferably a blow-down coming for example from the vacuum distillation column of a conversion plant of heavy oils described for example in the documents US5932090, EP2158304, EP2155835, EP2291238, or from other conversion processes of heavy oils by means of ebullated bed catalytic hydrocracking or other cracking processes. The blow-down of the feeding stream 1 is a solid-liquid suspension, viscous but pumpable at suitable temperatures.

The content of C5 asphaltenes (asphaltenes insoluble in n-pentane) in said feeding stream (1) ranges from 20 to 45%, whereas the THFis range from 10 to 20%.

The catalyst of the possible conversion process by means of hydrocracking can, for example, be based on one or more transition metals such as Ni, Co, Mo, preferably molybdenum.

The feeding stream 1 can have a temperature ranging for example from 320-350°C, and more preferably 320-330°C, in order to facilitate the pumpability of the fluid. Before entering the furnace 3, the stream 1 is preferably heated and fluidified by introducing overheated water vapour 2, for example a vapour flow-rate at about 350°C. The introduction of water vapour also prevents the formation of coke in the furnace.

The water vapour flow-rate preferably ranges from 0.5-2 % by weight of the flow-rate of the blow-down 1 before being introduced, and preferably about 1% by weight of the blow-down flow-rate.

The feeding stream 1' is preferably subsequently further heated to about 325-500°C by introducing it, for example, into the furnace 3. The temperature of the stream 4, immediately before being introduced into the separator 6, can be substantially the same as that inside the furnace 3, and is preferably equal to or lower than 480°C. The stream 4 can for example be a three-phase solid-liquid-vapour stream.

In the furnace 3, there is preferably a pressure higher than atmospheric pressure, more preferably ranging from 1-2 bara and even more preferably from 1.3-2 bara.

This pressure is preferably the same as the stream 4 immediately before undergoing the adiabatic expansion described hereunder.

In the present description, the pressure values, unless otherwise specified, should be considered as being absolute pressure values and not relating to atmospheric pressure.

According to an aspect of the invention, the stream 4 leaving the furnace 3 is subjected to a substantially adiabatic expansion in an environment at a pressure equal to or lower than about 0.1 bara and at a temperature equal to or lower than 450°C in order to separate a first less volatile fraction 17, having a boiling point at atmospheric pressure equal to or higher than 540°C and whose solid and/or anhydrous residue prevalently contains asphaltenes insoluble in pentane and/or other residues insoluble in tetrahydrofuran, from the heavy residue to be treated.

A second more volatile fraction 7, prevalently composed of maltenes and other hydrocarbons having a boiling point equal to or lower than 540°C at atmospheric pressure, is also preferably separated from the heavy residue.

The substantially adiabatic expansion is preferably effected by means of substantially instantaneous expansion (flash) through a lamination valve. The adiabatic expansion preferably takes place in a first separator 6 comprising a sealed container, in which there is the above pressure equal to or lower than 0.1 bara. More preferably, there is a pressure equal to or lower than 0.04 bara in the separator 6.

The above-mentioned maximum temperature of 450°C is an average value over the whole volume of the separator 6. The stream 4 is preferably subjected to a substantially adiabatic expansion in an environment at a temperature equal to or lower than 400°C, and more preferably equal to or lower than 390°C.

The flash or in any case adiabatic expansion advantageously takes place in the upper part of the sealed container or in any case in the first separator 6, whereas a stripping stream 5, preferably a stream of water vapour, is introduced into its lower part.

Depending on the operating conditions (stripping vapour flow-rate 5 and/or temperature of the flash chamber 6), the asphaltene-THFi fraction in the heavy stream can vary from 75 to 94%.

The ratio between the stripping vapour 5 and blow-down flow-rate 1 ranges from 0.03 to 0.75, more preferably from 0.03 to 0.5.

The second more volatile fraction 7 together with most of the stripping stream 5, is preferably evacuated from the first separator 6 reaching the ejector 8. The ejector 8 is advantageously of the type of Figure 2, i.e. equipped with a Venturi tube which sucks the stream 7, introduced into the narrow section of the Venturi tube, and expels it from the duct 8 depending on the flow-rate of a suitable motor fluid 9, for example vapour, that enters the Venturi tube from the duct 9'. It is therefore possible to control the vacuum degree in the first separator 6 by acting on the flow-rate of the motor fluid 9 entering the Venturi tube.

More preferably, it is possible to use a multistep ejector system, depending on the vacuum degree to be obtained in the flash chamber.

The stream 10, containing the second more volatile fraction 7, the stripping stream 5 and the motor fluid 9, is subsequently cooled, for example by means of the heat exchanger 11 - in order to condense the heavier phases, and then reaches the second separator 13.

In order to obtain a more effective condensation, the exchanger 11 operates at such a temperature that the stream 12 leaving it is preferably at 50°C.

The second separator 13 separates the following products from the stream 12:
- a first stream based on heavy hydrocarbons 14, rich in deasphalted heavy oils (DAO), maltenes and other hydrocarbons with a boiling point equal to or higher than 540°C;
- a second gaseous stream 15 based on lighter hydrocarbons and having a boiling point lower than 540°C; and
- a third stream 16, prevalently consisting of condensation water.

The first stream 14 can be advantageously reintroduced into the refining or conversion cycle of heavy oils upstream of the plant 100, for example a vacuum distillation column. The second gaseous stream 15 can be sold, for example, as fuel, propellant or another commercial product.

The gaseous stream 15, after leaving the condensation system of the ejectors, can be sent to a blow-down.

The first less volatile fraction 17, enriched in asphaltenes and poor in maltenes and other lighter hydrocarbons, practically containing all the asphaltenes of the feedstock and having a composition of maltenes and other lighter hydrocarbons varying from 6 to 25%, depending on the operative conditions, after being collected on the bottom of the first separator 6, can be poured by gravity, by means of an operating machine or repressurization lung, onto a cooled conveyor belt 18 and cooled thereon and transformed into a granular solid. After sudden cooling of the cooled belt 18 on the surface, the first less volatile fraction 17 solidifies very rapidly and disintegrates. For this purpose, the surface of the cooled conveyor belt 18 is preferably kept at a temperature equal to or lower than about 100°C, and more preferably equal to or lower than about 50°C.

Again for this purpose, the first less volatile fraction 17 is preferably deposited on the conveyor belt 18, or in any case discharged from the separator 6, at a relatively high temperature, for example equal to or higher than 315°C and even more preferably from **315 to 480°C.**

These high temperatures facilitate the same discharge operation. The reference number 19 indicates the solidified bituminous residue, in the form of granules. As it is in the form of granules rather than a paste or sludge, the bituminous residue 19 can be packaged directly, for example in metal barrels, and commercialized, or in any case managed much more easily. The granular bituminous residue can be used directly, for example, as an inert product for road surfaces or as fuel for blast furnaces or other industrial furnaces.

The combination of the adiabatic expansion, preferably flash or in any case sufficiently rapid, and high vacuum degree of the environment in which the expansion takes place, allows residues of previous recovery treatment, having a particularly high content of asphaltenes and inorganic compounds, to be treated, enabling their extremely effective separation into a) a first fraction extremely rich in maltenes, liquid or gaseous hydrocarbons and extremely poor in asphaltenes and b) a second fraction solid at room temperature, considerably enriched in asphaltenes and inorganic residues and extremely poor in maltenes and liquid or gaseous hydrocarbons at standard temperature and pressure.

More specifically, the process according to the invention is particularly suitable for treating residual blow-down streams from oil or hydrocarbon treatment processes, wherein said residues contain at least 30% by weight, and even over 50% by weight, of asphaltenes insoluble in pentane and/or other residues, not necessarily organic, insoluble in tetrahydrofuran.

The heavy residue to be treated may preferably have a content of C5-asphaltenes ranging from 20 to 45% by weight and a THFi content ranging from 10 to 20% by weight.

The content of solids insoluble in tetrahydrofuran and asphaltenes of the less volatile fraction 17 can easily reach and constantly maintain very high concentrations, for example ranging from 75% to 94% by weight, or in any case over 75% by weight. The invention, on the other hand, allows the second more volatile fraction 7 to become poorer in asphaltenes.

The separator 6 can comprise or consist of a vacuum column from which the heavy fraction can be extracted from the bottom and the light fraction laterally. A stream containing water vapour and incondensable products is extracted from the head of the column, which is sent to the ejector 8. The stream based on heavy hydrocarbons 14, coming from the separation of the ejector 8, can be joined with the side cut of the vacuum column (see paragraph 18).

The following results, obtained from a numerical simulation referring to the plant 100 assuming that the separator 6 is a container suitable for effecting a vacuum flash in a single separation step, provide a better demonstration of the efficacy of the separation obtainable with the invention.

### Numerical examples 1-8

In examples 1-4, the plant 100 was under the following conditions:
a.1) pressure P6 in the separator 6: 0.02 bara;
b.1) composition of the feeding stream 1:
   - hydrocarbons and in general a fraction with a boiling point lower than 500°C (500- in the table): 8% by weight;
   - hydrocarbons and in general a fraction with a boiling point ranging from 500-540°C (500-540 in the table): 14.2% by weight;
   - hydrocarbons and in general a fraction with a boiling point higher than 540°C, substantially identifiable as the maltene fraction (540+ in the table): 28.4% by weight;
   - asphaltene fraction insoluble in pentane (ASF-C5 in the table) but soluble in tetrahydrofuran: 29.4% by weight;
   - solid residue containing coke, other organic and/or possible inorganic fraction such as for example metallic sulfides and other catalytic residues insoluble in tetrahydrofuran (THFis in the table): 20% by weight;
d.1) temperature of the overheated vapour 2 and stripping vapour 5: 350°C;
e.1) pressures of the overheated vapour 2: 4 bara;
f.1) flow-rates of the overheated vapour 2 and stripping vapour 5: 50 kg/h.

The following values were obtained on the plant 100 with the previous parameters:

**Table 1**

| | **Case 1** | **Case 2** | **Case 3** | **Case 4** |
|---|---|---|---|---|
| **Q1, kg/h** | 4643 | 4637 | 4641 | 4637 |
| **Q2 + Q5, kg/h** | 1000 | 1000 | 3000 | 3000 |
| **T3, °C** | 423 | 365 | 394 | 326 |
| **Thermal requirement of furnace 3, MMKcal/h** | 0.29 | 0.12 | 0.20 | 0.01 |
| **T6, °C** | 386 | 340 | 394 | 326 |
| **Q17 total, kg/h** | 2429 | 2927 | 2428 | 2927 |
| **% separated from Q1** | 52.3 | 63.1 | 52.3 | 63.1 |

| **Composition of bottom product 17 [% by wt]** | | | | |
|---|---|---|---|---|
| **500-** | 0.6 | 0.19 | 0.04 | 0.13 |
| **500-540** | 0.37 | 1.37 | 0.29 | 1.12 |
| **540+** | 5.75 | 20.30 | 5.66 | 20.60. |
| **ASF-C5** | 55.58 | 46.46 | 55.76 | 46.47. |
| **THFis** | 38.24 | 31.68 | 38.22 | 31.68 |
| **Q7, kg/h** | 3214 | 2709 | 5212 | 4709 |

| **Composition of stream 7 [% by wt]** | | | | |
|---|---|---|---|---|
| **H₂O** | 31..1 | 36.91 | 57.55 | 63.70 |
| **500-** | 11.51 | 13.49 | 7.10 | 7.80 |
| **500-540** | 20.23 | 22.88 | 12.51 | 13.32 |
| **540+** | 36.78 | 26.71 | 22.72 | 15.17 |
| **ASF-C5** | 0.37 | 0.02 | 0.12 | 0.01 |
| **THFis** | 0 | 0 | 0 | 0 |

In Examples 5-8, the plant 100 was under the following conditions:
a.2) pressure P6 in the separator 6: 0.01 bara;
b.2) composition of the feeding stream 1: as in examples 1-4

The following values were obtained on the plant 100 with the previous parameters:

**Table 2**

| | **Case 5** | **Case 6** | **Case 7** | **Case 8** |
|---|---|---|---|---|
| **Q1, kg/h** | 4650 | 4637 | 4645 | 4637 |
| **Q2 + Q5, kg/h** | 1000 | 1000 | 3000 | 3000 |
| **T3, °C** | 479 | 415 | 459 | 383 |
| **Thermal requirement of furnace 3, MMKcal/h** | 0.45 | 0.26 | 0.39 | 0.17 |
| **T6, °C** | 437 | 385 | 402 | 354 |
| **Q17 total, kg/h** | 2430 | 2927 | 2429 | 2927 |
| **% separated from Q1** | 52.3 | 63.1 | 52.3 | 63.1 |

| **Composition of bottom product 17 [% by wt]** | | | | |
|---|---|---|---|---|
| **500-** | 0.12 | 0.32 | 0.08 | 0.23 |
| **500-540** | **0.59** | 1.86 | 0.42 | 1.53 |
| **540+** | **6.06** | 19.71 | 5.84 | 20.12 |
| **ASF-C5** | **54.96** | 46.42 | 55.39 | 46.45 |
| **THFis** | 38.27 | 31.68 | 38.24 | 31.68 |
| **Q7, kg/h** | 3220 | 2710 | 5216 | 4710 |

| **Composition of stream 7 [% in peso]** | | | | |
|---|---|---|---|---|
| **H₂O** | 31.05 | 36.90 | 57.52 | 63.70 |
| **500-** | 11.47 | 13.34 | 7.09 | 7.74 |
| **500-540** | 20.06 | 22.34 | 12.44 | 13.07 |
| **540+** | 36.44 | 27.35 | 22.63 | 15.48 |
| **ASF-C5** | 0.98 | 0.07 | 0.33 | 0.02 |
| **THFis** | 0 | 0 | 0 | 0 |

From the previous experimental cases, it can be observed how a process according to the invention allows the lighter and volatile fractions of the feeding stream 1 to be separated extremely effectively and markedly from the heavier and solid fractions, the former extremely concentrated in the streams Q7, the latter concentrated in the streams Q17. More specifically, in the streams Q7, the content of asphaltenes ASF-C5 and maltenes 540+, is considerably reduced, and the solid THFi residues are practically eliminated; the latter are almost completely limited to the solid streams Q17.

It can also be observed how, by reducing the pressure P6 in the separator 6, the percentage of asphaltenes ASF-C5 in the stream Q17 decreases, and consequently the separation and deasphalting efficacy of the process.

### End of numerical examples

More generically, regardless of the specific conditions of the previous numerical examples, a process according to the invention is particularly suitable for treating blow-down streams 1, residues based on hydrocarbons or other organic residues containing at least 30% by weight, and up to over 45-50% by weight, of asphaltenes insoluble in pentane and/or other residues insoluble in tetrahydrofuran.

As it is not necessary to resort to mechanical centrifugations, the process according to the invention can bring the flows treated to temperatures well over 150°C, making them more fluid and easier to treat in a continuous process - as for example in the embodiments previously described - rather than batch, of the overall plant or some of its components. In general, the invention allows a more effective flushing to be obtained, and also to actuate the process in an extremely simple plant, as it is equipped with only one separator 6, i.e. only one separation column.

As, on the other hand, the flows treated do not substantially exceed 450°C in temperature and generally do not undergo excessively severe conditions, on the one hand, the process according to the invention does not degrade or substantially damage the more volatile components of the residue to be treated, increasing the quantity extracted, and on the other hand, avoids the formation of coke in the same plant, reducing the necessity of maintenance and increasing its operative life.

The pressure control in the first separator 6 by means of the flow of motor fluid 9, in particular through a Venturi tube 8, is suitable for being inserted in a plant functioning in continuous.

The embodiment examples previously described can undergo various modifications and variations, all included in the protection scope of the invention. The cooled conveyor belt 18, for example, can be substituted more generally by other cooled conveyors or supports. All the details can be substituted by technically equivalent elements. The materials used, for example, as also the dimensions, can vary according to technical requirements. It should be noted that an expression such as "A *comprises B, C, D"* also comprises and describes the particular case in which "A *is composed of B, C, D".* The examples and lists of possible variants of the present patent application should be considered as being non-limiting lists.

## Claims

1. A process for treating a heavy hydrocarbon-based residue (1), in particular a bituminous residue with a high asphaltene content, comprising the following steps:
- bringing the heavy residue to be treated to a temperature within the range of 325-500°C;
- subjecting the heavy residue to be treated to a substantially adiabatic expansion in an environment having a pressure equal to or lower than 0.1 bara and at a temperature equal to or lower than 450°C;
so as to separate from the heavy residue to be treated:
- a first less volatile fraction (17) having a boiling point at atmospheric pressure equal to or higher than 540°C and whose solid and anhydrous residue mainly contains asphaltenes insoluble in pentane and other residues insoluble in tetrahydrofuran;
- and a second more volatile fraction (7) prevalently containing maltenes and other hydrocarbons having a boiling point equal to or lower than 540°C at atmospheric pressure;
- cooling the second more volatile fraction (7),
- introducing the cooled second more volatile fraction (12) into a second separator (13) to separate the cooled second more volatile fraction (12) into
- a first stream of heavy hydrocarbon-based residue (14) with a boiling point equal to or higher than 540°C,
- a second gaseous stream of lighter hydrocarbon-based residue (15) with a boiling point lower than 540°C; and
- a third stream (16) comprising of a condensation water.

2. The process according to claim 1, wherein the bituminous residue with a high asphaltene content contains C5-asphaltenes in an amount ranging from 20 to 45% by weight and THF is in a quantity ranging from 10 to 20% by weight.

3. The process according to claim 1 or 2, wherein the heavy residue to be treated is expanded starting from a pressure higher than 1 bara.

4. The process according to claim 3, wherein the heavy residue to be treated is expanded starting from a pressure ranging from 1-2 bara.

5. The process according to claim 1 or 2, wherein the adiabatic expansion is instantaneous.

6. The process according to claim 1 or 2, comprising the step of effecting the adiabatic expansion by passing the hydrocarbon-based residue to be treated through a lamination valve.

7. The process according to claim 1 or 2, wherein the heavy residue to be treated (1) contains at least 30% by weight of asphaltenes insoluble in pentane and other residues insoluble in pentane and tetrahydrofuran.

8. The process according to claim 7, wherein the heavy residue to be treated has a content of C5-asphaltenes ranging from 20 to 45% by weight and a content of THF is ranging from 10 to 20% by weight.

9. The process according to claim 1 or 2, wherein the first less volatile fraction (17) has a content of asphaltenes + THF is ranging from 75 to 94% by weight and a content of maltenes and other lighter hydrocarbons ranging from 6 to 25% by weight.

10. The process according to claim 1 or 2, comprising the step of obtaining the heavy residue to be treated (1) by converting heavy oils into lower-molecular-weight substances, subjecting the heavy oils to hydrocracking.

11. The process according to claim 10, wherein the hydrocracking is effected by bubbling hydrogen into the mass of heavy oils or other hydrocarbon-based substances.

12. The process according to claim 1, wherein the ratio between water vapour or other gaseous substance and flow-rate of heavy residue to be treated ranges from 0.03 to 0.75 by volume, more preferably from 0.03 to 0.5 by volume.

13. The process according to claim 1 or 2, comprising the step of effecting the substantially adiabatic expansion in a separator (6) comprising a container, and collecting, on the bottom of said container, the first less volatile fraction (17) in a non-gaseous form, for example in the form of a liquid, paste or sludge.

14. The process according to claim 1, comprising the step of depositing the first less volatile fraction (17) on a cooled conveyor belt (18), whose surface temperature is equal to or lower than 100°C.

15. The process according to claim 14, comprising the step of solidifying and possibly reducing the first less volatile fraction (17) to granules through cooling by contact with the cooled conveyor belt (18).

16. The process according to claim 1 or 2, **characterized in that** it is a continuous process.

## Patentansprüche

1. Verfahren zur Behandlung eines schweren Kohlenwasserstoff-basierten Rückstands (1), insbesondere einem bituminösen Rückstand mit einem hohen Asphalten-Gehalt, umfassend die folgenden Schritte:
- Bringen des zu behandelnden schweren Rückstands auf eine Temperatur in dem Bereich von 325-500°C;
- Unterwerfen des zu behandelnden schweren Rückstands mit einer im Wesentlichen adiabatischen Expansion in einer Umgebung mit einem Druck gleich oder geringer als 0,1 bara und bei einer Temperatur gleich oder geringer als 450°C; so dass von dem zu behandelnden schweren Rückstand abzutrennen sind;
- eine erste weniger flüchtige Fraktion (17) mit einem Siedepunkt bei atmosphärischen Druck gleich oder größer als 540°C und deren fester und wasserfreier Rückstand im Wesentlichen Asphaltene enthält, die in Pentan unlöslich sind, und andere Rückstände, die in Tetrahydrofuran unlöslich sind;
- und eine zweite flüchtigere Fraktion (7), die im Wesentlichen Maltene und andere Kohlenwasserstoffe mit einem Siedepunkt gleich oder geringer als 540°C bei atmosphärischem Druck enthält;
- Abkühlen der zweiten flüchtigeren Fraktion (7),
- Einführen der abgekühlten zweiten flüchtigeren Fraktion (12) in einen zweiten Separator (13), um die abgekühlte zweite flüchtigere Fraktion (12) aufzutrennen in
- einen ersten Strom schwerer Kohlenwasserstoff-basierter Rückstände (14) mit einem Siedepunkt gleich oder größer als 540°C,
- einen zweiten gasförmigen Strom leichterer Kohlenwasserstoff-basierter Rückstände (15) mit einem Siedepunkt geringer als 540°C; und
- einen dritten Strom (16), umfassend ein Kondensationswasser.

2. Verfahren gemäß Anspruch 1, worin der bituminöse Rückstand mit einem hohen Asphalten-Gehalt C5-Asphaltene in einer Menge in einem Bereich von 20 bis 45 Gew.-% enthält und THF ist in einer Menge in einem Bereich von 10 bis 20 Gew.-%.

3. Verfahren gemäß Anspruch 1 oder 2, worin der zu behandelnde schwere Rückstand expandiert wird, ausgehend von einem Druck größer als 1 bara.

4. Verfahren gemäß Anspruch 3, worin der zu behandelnde schwere Rückstand expandiert wird, ausgehend von einem Druck in einem Bereich von 1-2 bara.

5. Verfahren gemäß Anspruch 1 oder 2, worin die adiabatische Expansion sofortig ist.

6. Verfahren gemäß Anspruch 1 oder 2, umfassend den Schritt der Ausführung der adiabatischen Expansion dadurch, dass der zu behandelnde Kohlenwasserstoffbasierte Rückstand durch ein Laminierventil geleitet wird.

7. Verfahren gemäß Anspruch 1 oder 2, worin der zu behandelnde schwere Rückstand (1) mindestens 30 Gew.-% in Pentan unlösliche Asphaltene und andere in Pentan und Tetrahydrofuran unlösliche Rückstände enthält.

8. Verfahren gemäß Anspruch 7, worin der zu behandelnde schwere Rückstand einen Gehalt an C5-Asphaltenen in einem Bereich von 20 bis 45 Gew.-% hat und einen Gehalt an THF ist in einem Bereich von 10 bis 20 Gew.-%.

9. Verfahren gemäß Anspruch 1 oder 2, worin die erste weniger flüchtige Fraktion (17) einen Gehalt an Asphaltenen + THF in einem Bereich von 75 bis 94 Gew.-% und einen Gehalt von Maltenen und anderen leichteren Kohlenwasserstoffen in einem Bereich von 6 bis 25 Gew.-% hat.

10. Verfahren gemäß Anspruch 1 oder 2, umfassend den Schritt des Erhaltens des zu behandelnden schweren Rückstands (1) durch Umwandlung von schweren Ölen in Substanzen mit geringerem Molekulargewicht, Unterwerfen der schweren Öle einem Hydrocracken.

11. Verfahren gemäß Anspruch 10, worin das Hydrocracken bewirkt wird durch Leiten von Wasserstoff in die Masse von schweren Ölen oder anderen Kohlenwasserstoff-basierten Substanzen.

12. Verfahren gemäß Anspruch 1, worin das Verhältnis zwischen Wasserdampf oder anderen gasförmigen Substanzen und der Fließrate des zu behandelnden schweren Rückstands in einem Bereich von 0,03 bis 0,75 Vol.-Teilen liegt, mehr bevorzugt von 0,03 bis 0,5 Vol.-Teile.

13. Verfahren gemäß Anspruch 1 oder 2, umfassend den Schritt des Bewirkens der im Wesentlichen adiabatischen Expansion in einem Separator (6), umfassend einen Behälter, und Aufsammeln, am Boden des Behälters, der ersten weniger flüchtigen Fraktion (17) in einer nichtgasförmigen Form, beispielsweise in der Form einer Flüssigkeit, Paste oder eines Schlamms.

14. Verfahren gemäß Anspruch 1, umfassend den Schritt der Abscheidung der ersten weniger flüchtigen Fraktion (17) auf einem gekühlten Transportband (18), dessen Temperatur gleich oder geringer als 100°C ist.

15. Verfahren gemäß Anspruch 14, umfassend den Schritt der Verfestigung und gegebenenfalls Reduzierung der ersten weniger flüchtigen Fraktion (17) zu Granula durch Abkühlen mittels Kontakt mit dem gekühlten Transportband (18).

16. Verfahren gemäß Anspruch 1 oder 2, **dadurch gekennzeichnet, dass** es ein kontinuierliches Verfahren ist.

## Revendications

1. Procédé pour le traitement d'un résidu lourd (1) à base d'hydrocarbures, en particulier d'un résidu bitumineux à forte teneur en asphaltènes, comprenant les étapes consistant à :
- porter le résidu lourd à traiter à une température comprise dans la plage de 325 à 500 °C ;
- soumettre le résidu lourd à traiter à une expansion essentiellement adiabatique dans un environnement ayant une pression égale ou inférieure à 0,1 bar abs et à une température égale ou inférieure à 450 °C ;
de manière à séparer du résidu lourd à traiter :
- une première fraction moins volatile (17) ayant un point d'ébullition sous la pression atmosphérique égale ou supérieure à 540 °C et dont le résidu solide et anhydre contient principalement des asphaltènes insolubles dans le pentane et d'autres résidus insolubles dans le tétrahydrofurane ;
- et une seconde fraction plus volatile (7) contenant majoritairement des maltènes et d'autres hydrocarbures ayant un point d'ébullition égal ou inférieur à 540 °C sous la pression atmosphérique ;
- refroidir la seconde fraction plus volatile (7),
- introduire la seconde fraction plus volatile refroidie (12) dans un second séparateur (13) pour fractionner la seconde fraction plus volatile refroidie (12) en
- un premier courant de résidu (14) à base d'hydrocarbures lourds, ayant un point d'ébullition égal ou supérieur à 540 °C,
- un deuxième courant gazeux de résidu (15) à base d'hydrocarbures plus légers, ayant un point d'ébullition inférieur à 540 °C ; et
- un troisième courant (16) comprenant une eau de condensation.

2. Procédé selon la revendication 1, dans lequel le résidu bitumineux ayant une forte teneur en asphaltènes contient des asphaltènes en C₅ en une quantité dans la plage de 20 à 45 % en poids et du THF en une quantité dans la plage de 10 à 20 % en poids.

3. Procédé selon la revendication 1 ou 2, dans lequel le résidu lourd à traiter est détendu à partir d'une pression supérieure à 1 bar abs.

4. Procédé selon la revendication 3, dans lequel le résidu lourd à traiter est détendu à partir d'une pression se situant dans la plage de 1 à 2 bars abs.

5. Procédé selon la revendication 1 ou 2, dans lequel l'expansion adiabatique est instantanée.

6. Procédé selon la revendication 1 ou 2, comprenant l'étape consistant à effectuer l'expansion adiabatique en faisant passer à travers une valve laminaire le résidu à base d'hydrocarbures à traiter.

7. Procédé selon la revendication 1 ou 2, dans lequel le résidu lourd à traiter (1) contient au moins 30 % en poids d'asphaltènes insolubles dans le pentane et d'autres résidus insolubles dans le pentane et le tétrahydrofurane.

8. Procédé selon la revendication 7, dans lequel le résidu lourd à traiter a une teneur en asphaltènes en C₅ dans la plage de 20 à 45 % en poids et une teneur en THF dans la plage de 10 à 20 % en poids.

9. Procédé selon la revendication 1 ou 2, dans lequel la première fraction moins volatile (17) a une teneur en asphaltènes + THF dans la plage de 75 à 94 % en poids et une teneur en maltènes et autres hydrocarbures plus légers dans la plage de 6 à 25 % en poids.

10. Procédé selon la revendication 1 ou 2, comprenant l'étape consistant à obtenir le résidu lourd à traiter (1) en convertissant des huiles lourdes en substances de plus faible masse moléculaire, en soumettant les huiles lourdes à un hydrocraquage.

11. Procédé selon la revendication 10, dans lequel on effectue l'hydrocraquage en faisant passer bulle à bulle de l'hydrogène dans la masse d'huiles lourdes ou d'autres substances à base d'hydrocarbures.

12. Procédé selon la revendication 1, dans lequel le rapport entre la vapeur d'eau ou une autre substance gazeuse et le débit du résidu lourd à traiter se situe dans la plage de 0,03 à 0,75 en volume, de façon plus particulièrement préférée de 0,03 à 0,5 en volume.

13. Procédé selon la revendication 1 ou 2, comprenant l'étape consistant à effectuer l'expansion essentiellement adiabatique dans un séparateur (6) comprenant un récipient, et à recueillir, au fond dudit récipient, la première fraction moins volatile (17) sous une forme non gazeuse, par exemple sous la forme d'un liquide, d'une pâte ou d'une boue.

14. Procédé selon la revendication 1, comprenant l'étape consistant à déposer la première fraction moins volatile (17) sur une bande transporteuse refroidie (18), dont la température à la surface est égale ou inférieure à 100 °C.

15. Procédé selon la revendication 14, comprenant l'étape de solidification et possiblement réduction de la première fraction moins volatile (17) en granules par refroidissement par contact avec la bande transporteuse refroidie (18).

16. Procédé selon la revendication 1 ou 2, **caractérisé en ce qu'**il est un procédé continu.
